# EUROPEAN PATENT APPLICATION

(11) **EP 1 172 945 A2**
(43) Date of publication of application: **16.01.2002**
(21) Application number: 01106048.0
(22) Date of filing: 12.03.2001
(51) Int. Cl.: H04B 7/08

(54) **Diversity demodulation apparatus**

(30) Priority: 12.07.2000 JP 2000210962
(71) Applicant: KABUSHIKI KAISHA TOSHIBA, Kawasaki-shi, Kanagawa-ken 210-8572 (JP)
(72) Inventor: Koyama, Takeshi, c/o Toshiba Corporation, Tokyo (JP); Seki, Takashi, c/o Toshiba Corporation, Tokyo (JP)
(74) Representative: Henkel, Feiler, Hänzel

(57) **Abstract**

The present invention provides a data selective demodulation apparatus in a small scale of the circuit which is able to perform the stable demodulation even in fading conditions, and which has no deterioration of the demodulating efficiency. The apparatus selects two or more digital modulated signals in desired frequency band from RF signals received through an antenna, and then regenerates two or more sampling clocks from the digital modulated signals by the clock regenerator. The demodulated data derived from the digital modulated signals are delayed by specific periods in the delay units, and the delayed data are combined in the combiner. Then the delay amounts by in the delay units are so controlled that the sampling clock of the demodulated symbol of the demodulated signals to be supplied to the combiner become synchronized. As a result, it is able to provide a data selective demodulation apparatus in a small scale of the circuit which is able to execute the demodulating operation stable even in fading conditions, and which has no deterioration of the demodulating efficiency.

## Description

The present invention relates to a demodulator, and more particularly, to a data selective demodulation apparatus for demodulating one datum from two or more digital modulated signals.

In general, as a digital demodulation system for transmitting the digital signal data which signal levels are represented by two levels (hereinafter the data are referred to symbol) these systems are known, PSK (Phase Shift Keying), QAM (Quadrature Amplitude Modulation), and OFDM (Orthogonal Frequency Division Multiplexing).

In a modulation apparatus adopting these digital modulation systems (hereinafter the apparatus is referred to as digital modulation apparatus) two of I and Q symbols which are obtained through sampling and quantization by a clock (hereinafter referred to as a source clock) with a specific time interval are used for executing a quadrature modulation on an analog carrier.

The modulated signal is frequency-converted into an RF band such as a VHF band or a UHF band for transmitting on air.

On the other hand, in a demodulator of the digital modulation system (hereinafter referred to as a digital demodulator), a signal of the desired waveform is selected in the tuner then the signal is executed the frequency conversion into an IF (Intermediate Frequency) signal, and the signal converted into the digital signal in an A-D converter.

In general, to regenerate symbols in the digital demodulator As described above, there is a need to regenerate a sampling clock in synchronous with the source clock (hereinafter referred to as a regenerated clock) in the digital modulator.

That is, there is a need to execute samplings in synchronous with that in the digital modulator by supplying the regenerated clock in synchronous with the source clock to the A-D converter.

Further, as another way of regenerating symbols, it is known to use an interpolator.

That is, the A-D converter converts analog signals into digital signals using a clock asynchronous with an source clock, and then converts the digital signals into sampling signals in synchronous with that in the digital modulator by interpolating the timing signal in synchronous with that in the digital modulator.

Further, it is known that in the case of receiving signals in especially a traveling vehicle or the In similar to, it is possible to demodulate stably in a certain extent even in so-called fading conditions wherein the strength of the received RF signal varies with time.

That is, by receiving several RF signals on the different receiving positions using several antennas and demodulating the strongest RF signal selectively, it is able to stably demodulate them.

Further, since it is constructed that it selects or combines the signals after demodulating the modulating signals that are frequency-converted from the several RF signals on the different receiving position in the several demodulator, it is able to suitably demodulate the modulated signals, respectively. So that it is able to improve the receiving efficiency such as an error rate.

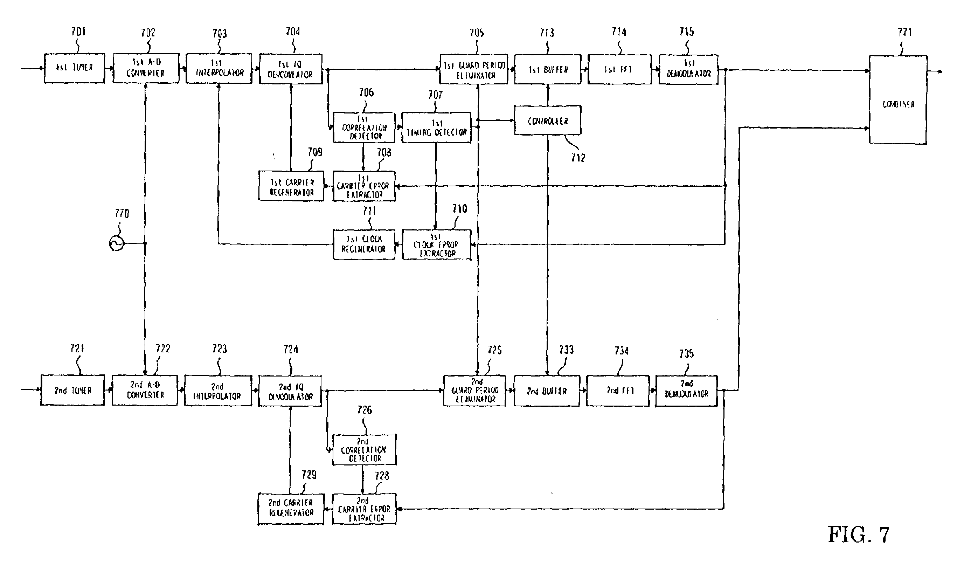

Referring now to FIGS. 7 to 9, a conventional data selective demodulation apparatus will be briefly described.

FIG. 7 is a block diagram showing a conventional data selective demodulation apparatus for use with an OFDM modulating system.

In FIG. 7, first tuner 701 selects a desired RF signal from those received through a first antenna (not shown). The first tuner 701 then converts the selected RF signal into an IF signal and supplies the IF signal to first A-D converter 702.

The first A-D converter 702 converts the analog IF signal supplied from the first tuner 701 into a digital IF signal by means of sampling the analog IF signal with a clock supplied from oscillator 770. The digital IF signal is then supplied to first interpolator 703.

The first interpolator 703 interpolates the signal supplied from the first A-D converter 702 according to clock signals supplied from clock regenerator 711, so as to converts the signal into a sampling signal in synchronous with that in the digital modulator. The sampling signal is then supplied to first IQ demodulator 704.

The first IQ demodulator 704 demodulates the signal supplied from the first interpolator 703 into an IQ signal according to a regenerated carrier signal supplied from first carrier regenerator 709, and supplies the demodulated signal to both first guard period eliminator 705 and first correlation detector 706.

The first correlation detector 706 detects the degree of correlation between guard periods according to the IQ signal supplied from the first IQ demodulator 704, and supplies a so-called correlation signal representing the detected correlation degree to timing detector 707 and first carrier error extractor 708.

The timing detector 707 generates a timing signal (hereinafter referred to as a symbol timing signal) for discriminating between guard periods and effective symbol periods of the signal supplied from the first correlation detector 706. The timing detector 707 then supplies the symbol timing signal to the first guard period eliminator 705, controller 712, clock error extractor 701 and second guard period eliminator 725.

The first guard period eliminator 705 eliminates guard period segments from the IQ signal supplied from the first IQ demodulator 704 based on the symbol timing signal supplied from the timing detector 707. The guard period eliminated signal is then supplied to first buffer 713.

The controller 712 generates and supplies control signals for controlling the first buffer 713 and second buffer 733 based on the symbol timing signal supplied from the timing detector 707.

The first buffer 713 sorts the signals supplied from the first guard period eliminator 705 according to the control signal supplied from the controller 712. And the sorted signals are supplied to first FFT 714.

The first FFT 714 operates a Fourier-transform on the signal supplied from the first buffer 713. The Fourier-transformed signal is supplied to first demodulator 715.

The first demodulator 715 demodulates a symbol in the signal supplied from the fist FFT 714, and it supplies the demodulated symbol to the first carrier error extractor 708, the clock error extractor 710 and combiner 771.

The first carrier error extractor 708 generates a carrier error signal from the signals supplied from the first correlation detector 706 and the first demodulator 715. The carrier error signal is then supplied to the first carrier regenerator 709.

The first carrier regenerator 709 regenerates a carrier signal from the carrier error signal supplied from the first carrier error extractor 708. The regenerated carrier signal is supplied to the first IQ demodulator 704.

The clock error extractor 710 generates a clock error signal from the symbol timing signal supplied from the timing detector 707 and the signal supplied from the first demodulator 715. And the clock error signal is supplied to the clock regenerator 711.

The clock regenerator 711 regenerates a clock signal in synchronous with that in the digital modulator, from the clock error signal supplied from the clock error extractor 710. The clock signal is supplied to the first and the second interpolators 703 and 723.

The second tuner 721 selects another desired RF signal received through a second antenna (not shown). The second tuner 721 then converts the selected RF signal into an IF signal and supplies the IF signal to second A-D converter 722.

The second A-D converter 722 converts the analog IF signal supplied from the second tuner 721 into a digital IF signal by means of sampling the analog IF signal with the clock signal supplied from oscillator 770. The digital IF signal is then supplied to second interpolator 723.

The second interpolator 723 interpolates the signal supplied from the second A-D converter 722 according to the clock signal supplied from clock regenerator 711, so as to converts the signal into a sampling signal in synchronous with that in the digital modulator. The sampling signal is then supplied to second IQ demodulator 724.

The second IQ demodulator 724 demodulates the signal supplied from the second interpolator 723 into an IQ signal according to a regenerated carrier signal supplied from second carrier regenerator 729, and supplies the demodulated IQ signal to both second guard period eliminator 725 and second correlation detector 726.

The second correlation detector 726 detects the degree of correlation between guard periods according to the IQ signal supplied from the second IQ demodulator 724, and supplies a correlation signal representing the detected correlation degree to second carrier error extractor 728.

The second guard period eliminator 725 eliminates guard period signals from the IQ signal supplied from the second IQ demodulator 724 based on the symbol timing signal supplied from the timing detector 707. The guard period eliminated signal is then supplied to second buffer 733.

The second buffer 733 sorts the signals supplied from the second guard period eliminator 725 according to the control signal supplied from the controller 712. The sorted signals are then supplied to second FFT 734.

The second FFT 734 operates a Fourier-transform on the signal supplied from the second buffer 733. The Fourier-transformed signal is then supplied to second demodulator 735.

The second demodulator 735 demodulates a symbol in the signal supplied from the second FFT 734, and it supplies the demodulated symbol to the second carrier error extractor 728 and combiner 771.

The second carrier error extractor 728 generates a carrier error signal from the signals supplied from the second correlation detector 726 and the second demodulator 735. The carrier error signal is then supplied to the second carrier regenerator 729.

The second carrier regenerator 729 regenerates a carrier signal from the carrier error signal supplied from the second carrier error extractor 728. The regenerated carrier signal is supplied to the second IQ demodulator 724.

The combiner 771 combines the first and second demodulated signals supplied from the first and the second demodulator 715 and 735. Thus a combined demodulated signal is output therefrom. However, if one of the demodulated signals is not present, only the other demodulated signal is directly output therefrom.

Referring now to FIGS. 8a to 8e, the operations of the first and the second correlation detectors 706 and 726, and the timing detector 707 will be explained in more detail.

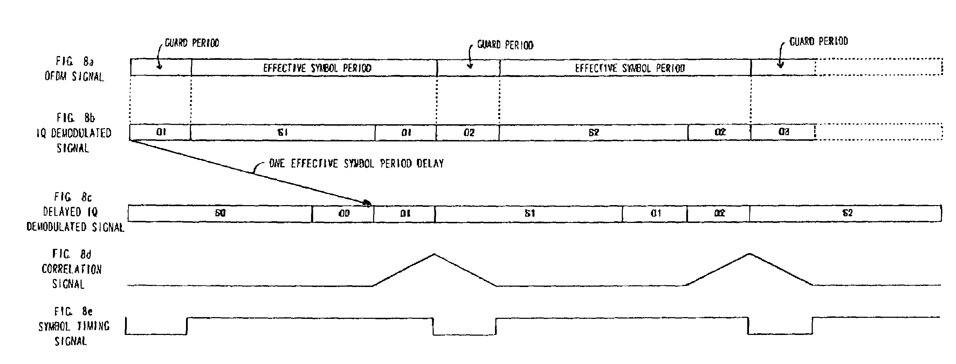

FIG. 8a is a timing chart showing the format of an OFDM signal. FIG. 8b shows an IQ demodulated signal. FIG. 8c shows a signal delayed by one effective symbol period from the IQ demodulated signal. FIG. 8d shows a correlation signal. FIG. 8e shows a symbol timing signal.

As shown in FIG. 8a, the OFDM signal is comprised of effective symbol periods and guard periods, and the guard periods are comprised of duplicates of rear end parts of their next previous effective symbol periods. Accordingly, the first and the second correlation detectors 706 and 726 detect a signal (hereinafter referred to as a correlation signal) representing a correlation between the IQ demodulated signal and the signal delayed by one effective symbol period from the IQ demodulated signal. The first correlation detector 706 supplies its detecting correlation signal to the timing detector 707 and the first carrier error extractor 708. The second correlation detector 726 supplies its detecting correlation signal to the second carrier error extractor 728.

Since the correlation signal represents the highest correlation at the rear end part of the guard period, as shown in FIG. 8d, the timing detector 707 generates the symbol timing signal for discriminating between the guard period and the effective symbol period by detecting the peaks of the correlation, as shown in FIG. 8e, and it supplies the generated symbol timing signal to the first guard period eliminator 705, the controller 712, the clock error extractor 710 and the second guard period eliminator 725.

The operation of the clock error extractor 710 will be explained.

As described above, the correlation signal, as shown in FIG. 8d, shows the highest correlation at the rear end part of the guard period. However, if there are some differences in the clock phase of the demodulator causing to a deviation of the sampling clock, it causes to the deviation of the peaks also. Accordingly, the clock error can be detected by detecting the period of the peaks in the correlation signal.

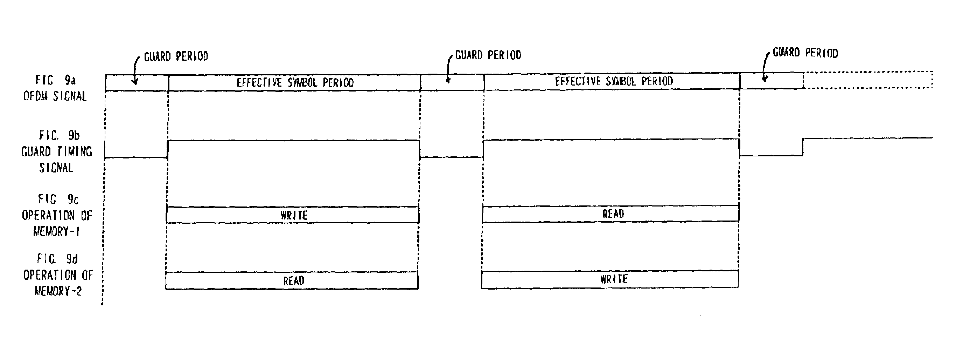

Next, the controller 712 and the first and the second buffer 713 and 733 will be explained by referring to FIG. 9. Both the first buffer 713 and the second buffer 733 are comprised of the memory-1 and memory-2, which are all the same in their configurations and operations.

FIG. 9 is a timing chart showing the operation of the first buffer 713 or the second buffer 733. FIG. 9a is a timing chart showing the format of the OFDM signal, which is identical with that in FIG. 8a. FIG. 9b shows a symbol timing signal. FIG. 9c is a timing chart showing the WRITE/READ operation in the memory-1. FIG. 9d is a timing chart showing the WIRTE/READ operation in the memory-2.

The OFDM signal is supplied from the first guard period eliminator 705 or the second guard period eliminator 725. The symbol timing signal is supplied from the timing detector 707. The writing-in timing into the memories 1 and 2 is controlled by the symbol timing signal. That is, the OFDM signal is comprised of the effective symbol period and the guard period, which are discriminated by the symbol timing signal.

Between them, only the effective symbol period is executed the Fourier-transform in the FFTs 714 and 734. The WRITE/READ operations in the memories 1 and 2 are also executed in the effective symbol periods, as shown in FIGS. 9c and 9d.

The write/read operations for memories 1 and 2 are alternately executed. That means, when the memory-1 is in a writing mode the memory-2 is in a reading mode. On the contrary, when the memory-2 is in a writing mode the memory-1 is in a reading mode.

As described above, since the conventional data selective demodulation apparatus is comprised of two or more demodulators for respectively executing demodulations according to the modulation signals, it is able to perform more stable demodulation in fading circumstances than another conventional apparatus comprised of only one demodulator.

However, the conventional data selective demodulation apparatus As described above has following problems.

Those digital modulated signals have different delay times for signals since the signals are transmitted to the demodulators by passing through different paths. So that, the timings for sampling the demodulated signals also differ in each demodulation circuits. Accordingly, when those modulated signals are sampled at different timings, there may occur a problem that the timings for demodulating signal from those modulated signals differ from each other.

So, in the conventional data selective demodulation apparatus, the sampling clock is generated from one modulated signal so as to sample these modulated signals at a same timing. In such a configuration mentioned above, at least one demodulator is sampled by a phase which is different from the original timing. So that it is not able to perform optimum demodulation. Further, under the inferior receiving such that one modulated signal is intermitted it is not able to perform the normal demodulating operation. For instance, if the demodulated signal which is used for obtaining the sampling signal is intermitted it is not able to obtain a sampling clock in synchronous with that in the digital modulator.

To dissolve the above problems, it is conceivable to obtain sampling timing signals by detecting signal levels of the two or more demodulated signals and then selecting a higher level demodulated signal. However, such an approach may result in an instantaneous breakdown since there arises a discontinuity upon switching between the clocks.

Although the above descriptions have been made only for the sampling timing, there are similar problems in the timing of demodulated symbols. That is, the timings of the demodulated symbols are required to be unified for selecting two or more modulated signals and then combining those demodulated signals together. In the conventional data selective demodulation apparatus, the symbol timing signal is generated from one modulated signal so as to unify the timings of the demodulated symbols. So, since at least one demodulator demodulates data which are different from the original effective symbol period it is not able to perform the optimum demodulated signals

The conventional data selective demodulation apparatus has a drawback that the demodulation efficiency of the demodulator is deteriorated remarkably since it is not able to perform the sampling to the received modulating signals with the optimum timing.

Further, it has another problem that it is not able to perform the demodulating operation under the inferior receiving state such that one modulated signal is intermitted.

The present invention objects to solve the problems mentioned above and to provide a data selective demodulation apparatus in a small scale of the circuit which is able to perform the stable demodulation even in fading conditions, and which has no deterioration of the demodulating efficiency.

To achieve the above objects, the data selective demodulation apparatus according to one aspect of the invention has two or more tuners for selecting a desired frequency band in received signals received by an antenna so as to output digital modulated signal, two or more clock regenerators for regenerating sampling clocks from the digital modulated signals, two or more demodulating apparatus for demodulated data from the digital modulated signals, two or more delay units for delaying the demodulated data for specific periods, a combiner for combining the data delayed by the delay units, and a controller for controlling the amount of the delays in the delay units so that the sampling clocks of the demodulation symbols of the demodulated signal to be supplied to the combiner become synchronized.

Additional objects and advantages of the present invention will be apparent to persons skilled in the art from a study of the following description and the accompanying drawings, which are hereby incorporated in and constitute a part of this specification.

A more complete appreciation of the present invention and many of the attendant advantages thereof will be readily obtained as the same becomes better understood by reference to the following detailed description when considered in connection with the accompanying drawings, wherein:
FIG. 1 is a block diagram illustrating the configuration of the data selective demodulation apparatus according to the first embodiment of the present invention;
FIG. 2 is a block diagram illustrating the configuration of the first and the second sampling converters 181 and 182;
FIG. 3 is a timing chart illustrating the operation of the sampling converter;
FIG. 4 is a block diagram illustrating the configuration of the data selective demodulation apparatus according to the second embodiment of the present invention;
FIG. 5 is a timing chart illustrating the operation of the controller 712;
FIG. 6 is a block diagram illustrating the configuration of the data selective demodulation apparatus according to the third embodiment of the present invention;
FIG. 7 is a block diagram illustrating the configuration of the conventional data selective demodulation apparatus;
FIG. 8 is a timing chart illustrating the operations of the first and the second correlation detectors 706 and 726 and the timing detector 707; and
FIG. 9 is a timing chart illustrating the operations of the controller 712 and the first and the second buffers 713 and 733.

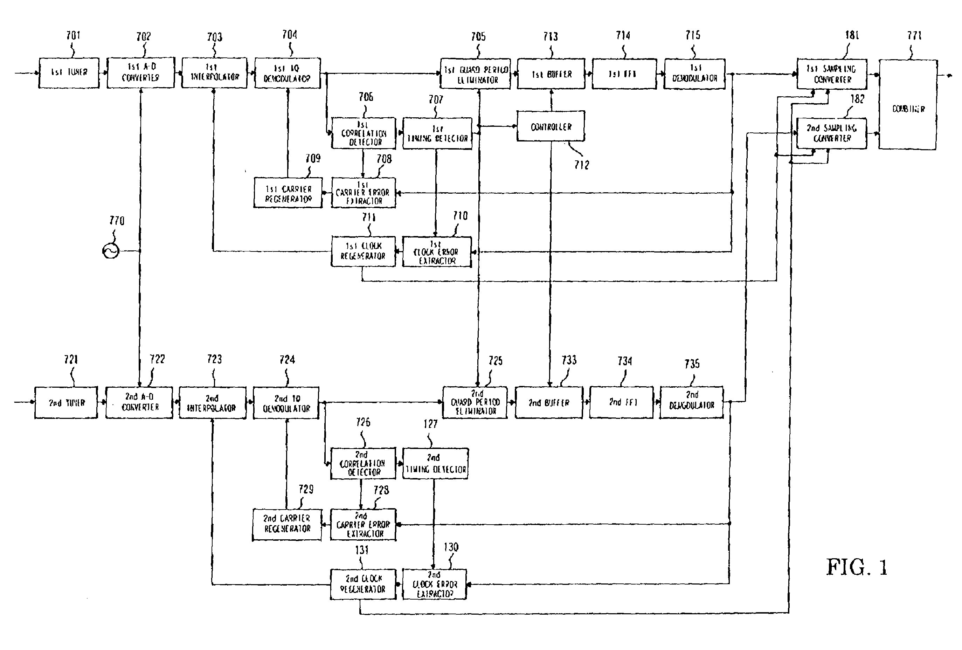

The present invention will be described in detail with reference to the FIGS. 1 through 6.

### <1st Embodiment>

Referring now to the attached drawings FIGS. 1 to 3, the first embodiment of the present invention will be explained hereinafter.

FIG. 1 shows a configuration of the data selective demodulation apparatus of the first embodiment according to the present invention.

Compared to the conventional apparatus of FIG. 7, the apparatus of FIG. 1 further includes second timing detector 127, second clock error extractor 130, second clock regenerator 131 and second sampling converters 181 and 182. And wherein the clock signal to be supplied to the second interpolator 723 comes from the second clock regenerator 131, and the signals to be supplied to the combiner 771 come from the first and the second sampling converters 181 and 182. As the other configurations are the same as those in FIG. 7, their explanations will be omitted hereinafter.

The second timing detector 127 generates a symbol timing signal for discriminating the guard period and the effective symbol period in the signal which is supplied from the second correlation detector 726, and supplies the symbol timing signal to the second clock error extractor 130.

The second clock error extractor 130 generates a clock error signal from the symbol timing signal which is generated from the second timing detector 127 and a signal which is generated from the second demodulator 735, and supplies the clock error signal to the second clock regenerator 131.

The second clock regenerator 131 regenerates the clock signal having a sampling clock in synchronous with that in the digital modulator from the clock error signal supplied from the second clock error extractor 130, and further it supplies the clock signal to the second interpolator 723, the first sampling converter 181, and the second sampling converter 182.

The first sampling converter 181 delays the signal which is supplied from the first demodulator 715 by the degree determined by the clock signals which are supplied from the first and the second clock regenerators 711 and 131, so as to output the delayed signal to the combiner 771.

The second sampling converter 182 delays the signal which is supplied from the second demodulation apparatus 735 by the degree determined by the clock signals which are supplied from the first and the second controllers 711 and 131, so as to output the delayed signal to the combiner 771. The delay control will be explained later in detail.

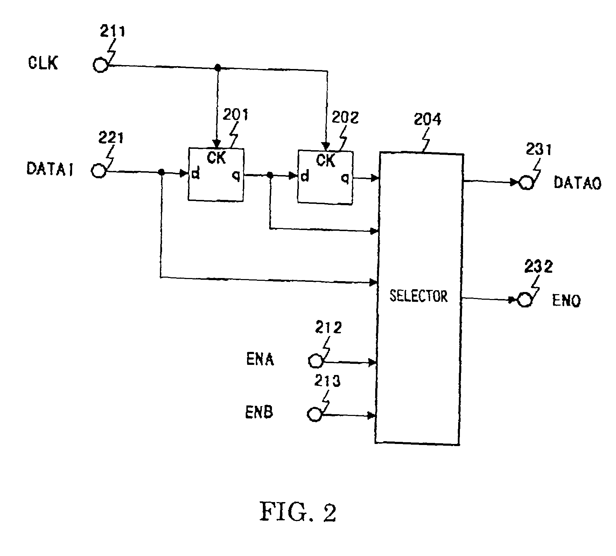

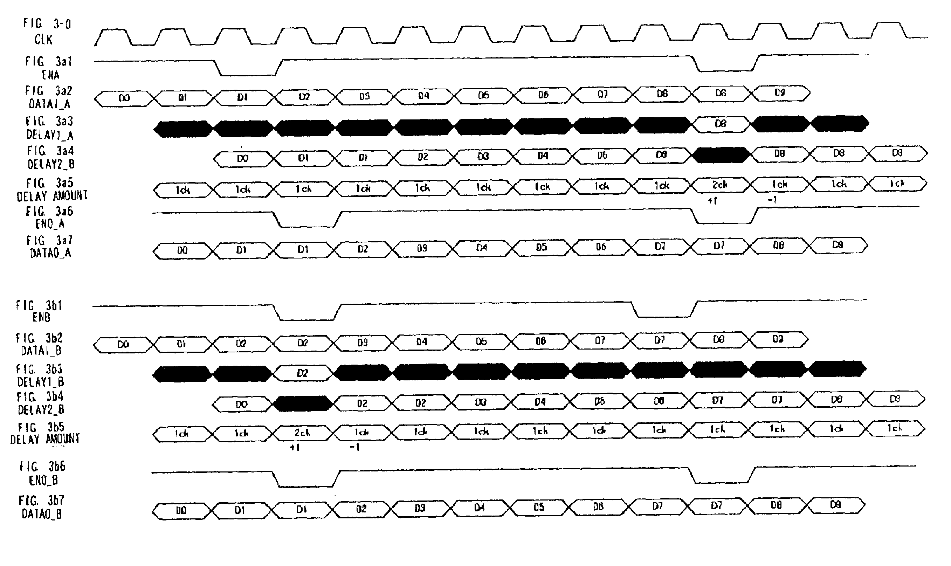

Referring now to FIGS. 2 and 3, the first and the second sampling converters 181 and 182 will be explained in detail hereinafter.

FIG. 2 shows the configuration of the sampling converter of the data selective demodulation apparatus according to the first embodiment of the present invention shown in FIG. 1. The configurations are common in both the first and the second sampling converters 181 and 182.

A clock signal CLK is supplied to input terminal 211 from the oscillator 770. A first clock signal ENA is supplied to input terminal 212 from the first clock regenerator 711. A second clock signal ENB is supplied to input terminal 213 from the second clock regenerator 131. A demodulated signal DATAI is supplied to input terminal 221 from either the first demodulator 715 or the second demodulator 735.

First flip-flop 201 supplies a signal DELAY1 delayed by one clock of the clock signal CLK from the demodulated signal DATA1 to second flip-flop 202 and selector 204. Second flip-flop 202 supplies a signal DELAY2 delayed further by one clock of the clock signal CLK from the signal DELAY1 supplied from the first flip-flop 201 to selector 204.

The selector 204 calculates an amount of delay from the first and the second clock signals ENA and ENB according to a specific algorithm as described later. According to the calculated delay amount the selector 204 selects one of the signals DATA1, DELAY1 and DELAY2 and then outputs the selected signal through output terminal 231 as demodulated signal DATA0. The selector 204 also selects one of the signals ENA and ENB and delays the selected signal by one clock. The selected one of the signals ENA and ENB is also output through output terminal 232 as clock signal EN0.

Referring now to FIGS. 3-0, 3a1 to 3a7 and 3b1 to 3b7, operations of the sampling converters 181 and 182 will be explained hereinafter.

FIGS. 3a1 to 3a7 depict signals on circuit portions (hereinafter referred to as system A) associated with the first sampling converter 181, and FIGS. 3b1 to 3b7 depict signals on circuit portions (hereinafter referred to as system B) associated with the second sampling converter 182. The signals related to the first sampling converter 181 are presented with suffix "_A", and the signals related to the second sampling converter 182 are presented with suffix "_B". FIG. 3-0 shows a clock CLK to be supplied to the first and the second sampling converters 181 and 182.

When the signal ENA (FIG. 3a1) is in the high level (hereinafter simply referred to as "H"), the demodulated signal DATAI-A (FIG. 3a2) is effective. On the other hand, when the signal ENA (FIG. 3a1) is in the low level (hereinafter simply referred to as "L"), the demodulated signal DATAI-A (FIG. 3a2) is ineffective. In the period that the signal ENA (FIG. 3a1) is in "L", the demodulated signal DATAI-A (FIG. 3a2) holds the data just one clock before.

When the signal ENB (FIG. 3b1) is in "H", the demodulated signal DATAI-B (FIG. 3b2) is effective. However, when the signal ENA (FIG. 3b1) is in "L", the demodulated signal DATAI-B (FIG. 3b2) is ineffective. While in the period that the signal ENA (FIG. 3b1) is in "L", the demodulated signal DATAI-B (FIG. 3b2) holds the data just one clock before.

Initially, the signal ENA (FIG. 3a1) and the signal ENA (FIG. 3b1) become "L" at the same timing. Thereafter, their timings of becoming "L" differ from each other. However, the difference between their timings always falls in the range of plus-minus one clocks, since average cycles of the signals ENA (FIG. 3a1) and ENA (FIG. 3b1) are the same.

Signal DELAY1-A (FIG. 3a3) is a signal delayed one clock from the demodulated signal DATAI-A (FIG. 3a2) according to the first flip-flop 201, as shown in FIG. 2. The signal DELAY2-A (FIG. 3a4) is a signal further delayed by one clock from the signal DELAY1-A (FIG. 3a3) according to the second flip-flop 202, as shown in FIG. 2.

The signal DELAY1-B (FIG. 3b3) is a signal delayed one clock from the demodulated signal DATAI-B (FIG. 3b2) according to the first flip-flop 201, as shown in FIG. 2. The signal DELAY2-B (FIG. 3b4) is a signal further delayed by one clock from the signal DELAY1-B (FIG. 3b3) according to the second flip-flop 202, as shown in FIG. 2.

Initially, the selector 204, shown in FIG. 2, selects the signals that delayed by one clock, that is it selects the signal DELAY1-A (FIG. 3a3) and the signal DELAY1-B (FIG. 3b3). Thereafter, the amount of the delay is increased or decreased dependent on the timings of that the signals ENA (FIG. 3a1) and ENA (FIG. 3b1) become "L".

That is, at the time A that the signal ENA (FIG. 3a1) becomes "L" before the signal ENA (FIG. 3b1), the amount of the delay of system B is incremented by one clock (+1) at the time B.

Next, when the signal ENA (FIG. 3b1) becomes "L" at the time B, the delay amount of system B signals is decremented by one clock (-1) at the time C so that the amount of delay of the system B signals returns to the one clock delay state.

In a similar fashion, at the time D that the signal ENA (FIG. 3b1) becomes "L" before the signal ENA (FIG. 3a1), the amount of the delay of system A signals is incremented by one clock (+1) at the time E.

Next, when the signal ENA (FIG. 3a1) becomes "L" at the time E, the delay amount of system A signals is decremented by one clock (-1) at the time F so that the amount of delay of the system A signals returns to the one clock delay state.

Now, it will be described about the demodulated signals DATAO-A and DATAO_B which are output from the sampling converters 181 and 182.

According to the delay amount, as shown in FIG. 3a5, the demodulated signal DATAO-A (FIG. 3a7) selects the signal DELAY1-A (FIG. 3a3) when the delay amount is one clock, or the signal DELAY2-A (FIG. 3a4) when the delay amount is two clocks.

According to the delay amount, as shown in FIG. 3b5, the demodulated signal DATA-B (FIG. 3a7) also selects the signal DELAY1-B (FIG. 3b3) when the delay amount is one clock, or the signal DELAY2-B (FIG. 3b4) when the delay amount is two clocks.

The solidly shaded areas in FIGS. 3a3, 3a4, 3b3 and 3b4 show the signals output as the demodulated signal DATA-A or the demodulated signal DATA-B. As shown in FIG. 3, the timings of the demodulated signal DATAO-A (FIG. 3a7) of the system A shown in FIG. 3a7 and the demodulated signal DATAO-B (FIG. 3b7) of the system B are the same.

Now, signals ENO-A and ENO_B output from the sampling converters 181 and 182 will be explained.

The signals ENO-A and ENO-B are strings of signals become "L" first in the signals ENA (FIG. 3a1) and ENA (FIG. 3b1) and delayed by one clock.

That is, when the signal ENA (FIG. 3a1) becomes "L" before the signal ENB (FIG. 3b1), the signal ENO-A (FIG. 3a6) or ENO-B (FIG. 3b6) becomes "L" at the time B in FIG. 3 just one clock after the time A that the signal ENA (FIG. 3a1) had become "L".

In a similar fashion, when the signal ENA (FIG. 3b1) becomes "L" before the signal ENA (FIG. 3a1), the signal ENO-A or ENO-B becomes "L" at the time E in FIG. 3 just one clock after the time D that the signal ENA (FIG. 3b1) had become "L".

In similar to the demodulated signals DATAO-A and DATAO-B, the timings of the output clock signals ENO-A (of system A) and ENO-B (of system B) become the same.

As described above, the data selective demodulation apparatus according to the first embodiment of the present invention is able to demodulate two or more modulating signals at optimum timings. The data selective demodulation apparatus is also able to output one of or the combined signal of the demodulated signals without causing mismatches. Therefore, the data selective demodulation apparatus is able to stably demodulate the signals even in fading conditions.

### <2nd Embodiment>

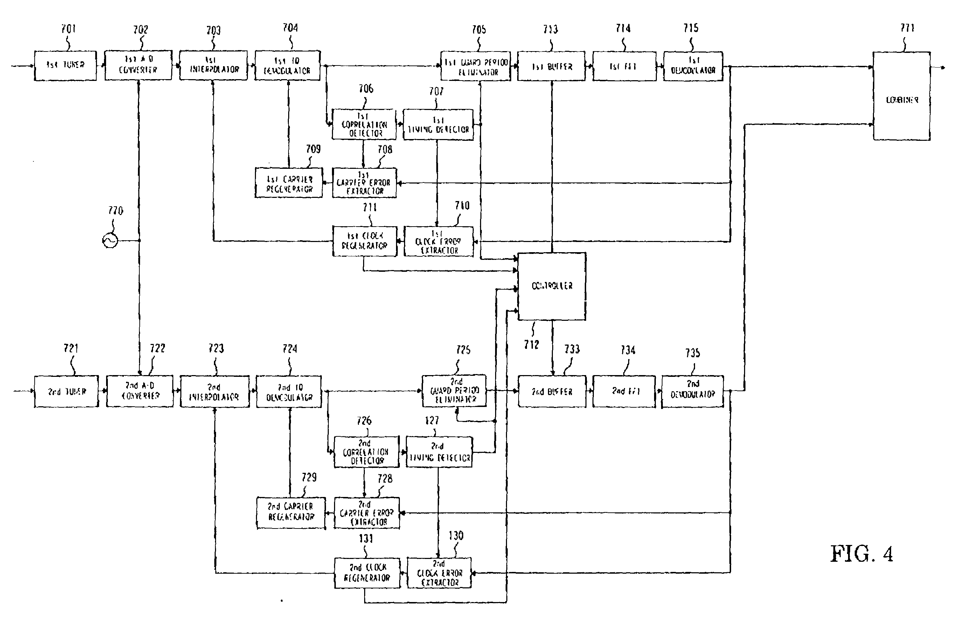

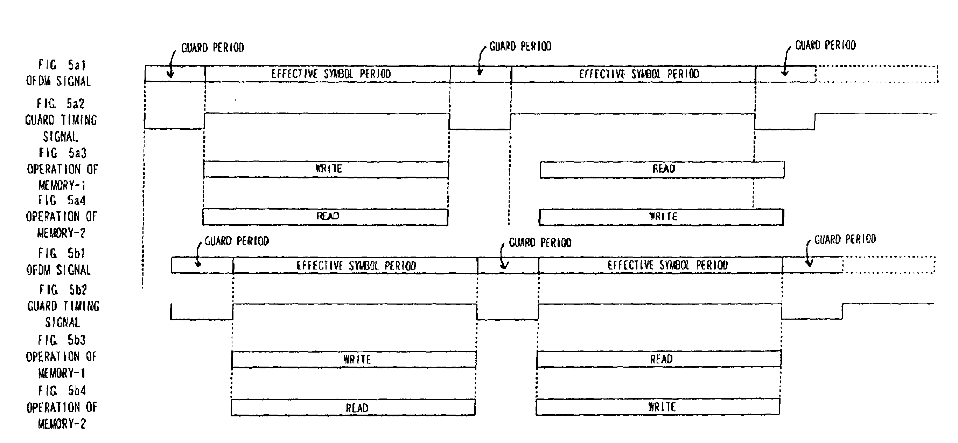

Referring now to FIGS. 4 and 5, a second embodiment of the present invention will be explained in detail.

FIG. 4 shows a configuration of the data selective demodulation apparatus of the second embodiment according to the present invention.

Compared to the conventional apparatus of FIG. 7, the apparatus of FIG. 4 further includes second timing detector 127, second clock error extractor 130 and second clock regenerator 131. Wherein the clock signal to be supplied to the second interpolator 723 comes from the second clock regenerator 131, and the signals to be supplied to the combiner 771 come from the first and the second sampling converters 181 and 182. And wherein the clock signals from the first and the second clock regenerators 711 and 131 are further supplied to the controller 712. The second timing detector 127, the second clock error extractor 130 and the second clock regenerator 131 are the same as those of FIG. 1. As the other configurations in FIG. 4 are the same as those in FIG. 7, their explanations will be omitted hereinafter.

The operation of the controller 712 will be explained in reference to FIGS. 5a1 to 5a4 and 5b1 to 5b4.

FIGS. 5a1 to 5a4 and 5b1 to 5b4 are timing charts showing the operations of the first and the second buffers 713 and 732.

FIGS. 5a1 to 5a4 depict signals on circuit portions (hereinafter referred to as system A) associated with the first buffer 713. FIGS. 5b1 to 5b4 depict signals on circuit portions (hereinafter referred to as system B) associated with the second buffer 733.

FIG. 5a1 is a timing chart showing the format of the OFDM signal of system A. FIG. 5a2 shows a guard timing signal of system A. The first buffer 713 contains two memories; memory-1 and memory-2 (not shown). Here, one memory unit may be used by being divided into two memory sections, in place of two independent memories. FIG. 5a3 is a timing chart showing the WRITE/READ operation of the memory-1 of system A. FIG. 5a4 shows a timing chart showing the WRITE/READ operation of the memory-2 of system A. FIG. 5b1 is a timing chart showing the format of the OFDM signal of system B. FIG. 5b2 is a guard timing signal of system B. The second buffer 733 also two memories; memory-1 and memory-2 (not shown). Here, one memory unit may be used by being divided into two memory sections, in place of two independent memories. FIG. 5b3 is a timing chart showing the WRITE/READ operation of the memory-1 of system B. FIG. 5b4 is a timing chart showing the WRITE/READ operation of the memory-2 of system B.

The OFDM signal of system A, as shown in FIG. 5a1, is supplied from the first guard period eliminator 705. The symbol timing signal of system A, as shown in FIG. 5a2, is supplied from the first timing detector 707.

The OFDM signal of system B, as shown in FIG. 5b1, is supplied from the second guard period eliminator 725. The symbol timing signal of system B, as shown in FIG. 5b2, is supplied from the second timing detector 127.

The write timings of the memories 1 and 2 in the first buffer 713 of system A is controlled by the symbol timing signal of system A, as shown in FIG. 5a2. The write timings of the memories 1 and 2 in the second buffer 733 of system B is controlled by the symbol timing signal of system B, as shown in FIG. 5b2.

As a result, even if the OFDM signals of system A and system B are each input at different timings, the data in the effective symbol period can be accurately selected and then written into the memories 1 and 2.

The write timings of the memories 1 and 2 in the first buffer 713 of system A and of the memories 1 and 2 in the second buffer 733 of system B vary dependent on the timings of the advents of the symbol timing signals of system A and system B.

That is, between the symbol timing signals from the first timing detector 797 of system A and the second timing detector 127 of system B, the latest one is selected and controlled.

As a result, the read timings of system A and system B will become the same.

The read timings of system A and system B are controlled by the first clock signal ENA from the first clock regenerator 711 and the second clock signal ENB from the second clock regenerator 131.

In similar to the sampling converter, as shown in FIG. 2, the delay amount is increased or decreased dependent on the "L" periods of the signals ENA and ENB.

As a result, the timings of the output signals of system A and system B will become the same.

As described above, the data selective demodulation apparatus according to the second embodiment of the present invention is able to demodulate two or more modulating signals at optimum timings. The data selective demodulation apparatus is also able to output one of or the combined signal of the demodulated signals without causing mismatches. Therefore, the data selective demodulation apparatus is able to stably demodulate the signals even in fading conditions.

### <3rd Embodiment>

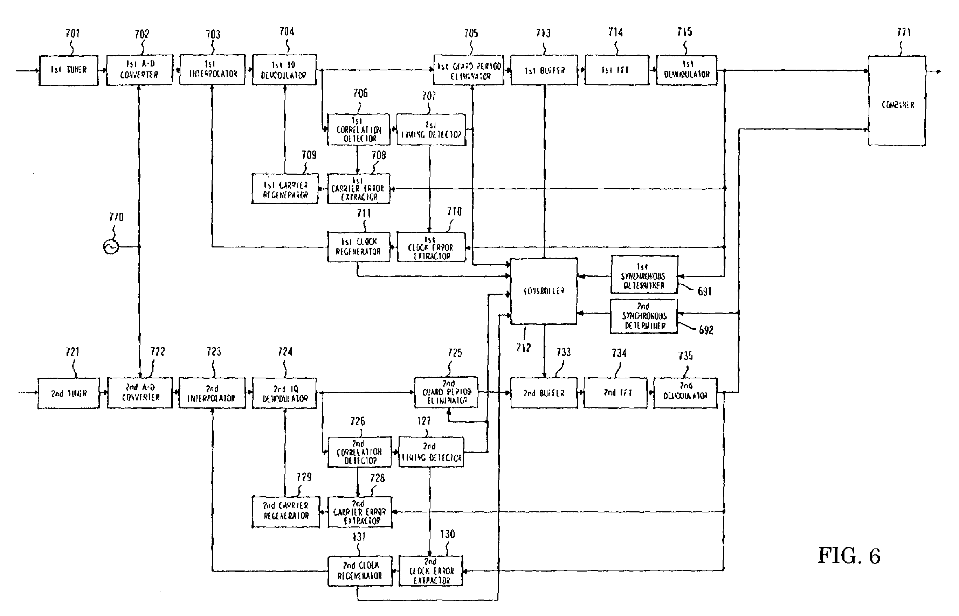

Referring to FIG. 6, the third embodiment of the present invention will be explained hereinafter.

FIG. 6 shows a configuration of the data selective demodulation apparatus of the third embodiment according to the present invention.

The configuration shown in FIG. 6 has the same components as those of the second embodiment of the present invention shown in FIG. 4 except that it adds first and the second synchronous determiners 691 and 692, and further it changes to supply the signal to the controller 712. As the other configurations are the same as those in FIG. 4, their explanations will be omitted hereinafter

The first synchronous determiner 691 generates a first synchronous signal indicating the synchronous condition from a signal supplied from the demodulator 715 and supplies the generated signal to the controller 712. The second synchronous determiner 692 generates a second synchronous signal indicating the synchronous condition from a signal supplied from the demodulator 735.

The controller 712 still execute controls of the first and the second synchronous signals further to the controls in the embodiment of FIG. 4.

That is, when the first synchronous signal indicates the synchronous condition and the second synchronous signal indicates the asynchronous condition, the clock signal ENB of system B is replaced by the clock signal ENA of system A. As a result, the amount of the delay of system A is unaffected by the clock signal of system B, and thus the amount of delay always remains constant.

In a similar fashion, when the second synchronous signal indicates the synchronous condition and the first synchronous signal indicates the asynchronous condition, the clock signal ENA of system A has to be replaced by the clock signal ENB of system B. As a result, the amount of the delay of system B is unaffected by the clock signal of system A, and thus the amount of delay of system B always remains constant.

Accordingly, even when the level of the received modulated signal of system A (or system B) declines remarkably, the level of the received modulated signal of system B (or system A) can be stably demodulated.

One configuration for controlling the clock signal using the synchronous signal indicating the synchronous condition of the demodulated signals has been described above. However, the present invention is not limited to such a configuration.

For instance, it is possible a configuration for detecting the level of the received modulated signal and then interrupting a control based on a modulated signal with a low level.

As described above, the data selective demodulation apparatus according to the third embodiment of the present invention is able to demodulate two or more modulating signals at optimum timings. The data selective demodulation apparatus is also able to output one of or the combined signal of the demodulated signals without causing mismatches. Therefore, the data selective demodulation apparatus is able to stably demodulate the signals even in fading conditions.

Further, even under an inferior receiving condition such that one of modulated signals is intermitted, the data selective demodulation apparatus according the present invention is able to execute the demodulating operation sable.

As described above, the present invention is able to provide a data selective demodulation apparatus which is able to stably demodulate signals even in fading conditions since the apparatus selects two or more signals which are demodulated at optimum timings using the sampling clocks and the symbol timings that are generated from two or more modulated signals and the combine them together. The present invention is also able to provide a data selective demodulation apparatus which has no deterioration of the demodulating efficiency in a small scale of the circuit

While there have been illustrated and described what are at present considered to be preferred embodiments of the present invention, it will be understood by those skilled in the art that various changes and modifications may be made, and equivalents may be substituted for elements thereof without departing from the true scope of the present invention. In addition, many modifications may be made to adapt a particular situation or material to the teaching of the present invention without departing from the central scope thereof. Therefore, it is intended that the present invention not be limited to the particular embodiment disclosed as the best mode contemplated for carrying out the present invention, but that the present invention includes all embodiments falling within the scope of the appended claims.

The foregoing description and the drawings are regarded by the applicant as including a variety of individually inventive concepts, some of which may lie partially or wholly outside the scope of some or all of the following claims. The fact that the applicant has chosen at the time of filing of the present application to restrict the claimed scope of protection in accordance with the following claims is not to be taken as a disclaimer or alternative inventive concepts that are included in the contents of the application and could be defined by claims differing in scope from the following claims, which different claims may be adopted subsequently during prosecution, for example, for the purposes of a divisional application.

## Claims

1. a data selective demodulation apparatus comprising:
two or more tuners for selecting a desired frequency band in received signals received by an antenna so as to output digital modulated signal;
two or more clock regenerators for regenerating sampling clocks from the digital modulated signals;
two or more demodulating apparatus for demodulated data from the digital modulated signals;
two or more delay units for delaying the demodulated data for specific periods;
a combiner for combining the data delayed by the delay units; and
a controller for controlling the amount of the delays in the delay units so that the sampling clocks of the demodulation symbols of the demodulated signal to be supplied to the combiner become synchronized.

2. A data selective demodulation apparatus as claimed in claim 1, wherein the controller controls the amount of the delays according to the two or more clock regenerators.

3. A data selective demodulation apparatus as claimed in claim 1, comprising
two or more timing detectors for generating signals for indicating effective symbol periods of the demodulated data;
wherein the controller controls the amount of delay by the detection result of the timing detectors.

4. A data selective demodulation apparatus as claimed in claim 1 comprising:
a synchronization determiner for determining whether the plurality of digital modulated signals are in a synchronous condition or not; and
wherein the controller avoids usage of the sampling clocks which are generated from the digital modulated signals that are determined to be under the asynchronous condition in the synchronization determiner.
